Europäisches Patentamt

(19) European Patent Office

Office européen des brevets

(11) EP 0 870 916 A2

(12) EUROPEAN PATENT APPLICATION

(43) Date of publication:
14.10.1998 Bulletin 1998/42

(51) Int. Cl.⁶: F02D 19/02

(21) Application number: 98106368.8

(22) Date of filing: 07.04.1998

(84) Designated Contracting States:
AT BE CH CY DE DK ES FI FR GB GR IE IT LI LU
MC NL PT SE
Designated Extension States:
AL LT LV MK RO SI

(30) Priority: 08.04.1997 IT TO970297

(71) Applicant:
MTM - Meccanica Tecnica Moderna S.r.l.
12062 Cherasco (IT)

(72) Inventors:
• Cane, Marcello
  12040 Corneliano d'Alba (IT)
• Garetto, Alberto
  12038 Savigliano (IT)
• Ceratto, Danilo
  12051 Alba (IT)

(74) Representative:
Franzolin, Luigi et al
STUDIO TORTA S.r.l.,
Via Viotti, 9
10121 Torino (IT)

(54) **An injection unit and injection method for supplying a gaseous fuel to an engine, particularly a propulsion engine**

(57) An injection unit (8) and a method for supplying a gaseous fuel to an engine (2) according to which variable fuel flow rates are delivered by a solenoid valve unit (12) comprising solenoid valves connected together in parallel and controlled by a control device (25) which is able to receive, at each operating instant of the engine (2), a signal proportional to the theoretical instantaneous rate of flow (Q) to be supplied, to calculate an instantaneous overall delivery rate (C) such as to allow delivery of the instantaneous flow rate (Q), and to generate control signals (S1, S2) such as to cause opening of at least one of the solenoid valves (12) in such a way as to provide the calculated overall delivery rate (C) and deliver the required theoretical instantaneous flow rate (Q).

Fig.2

Fig.1

EP 0 870 916 A2

**Description**

The present invention relates to an injection unit and a method for supplying a gaseous fuel to an engine, particularly a propulsion engine.

As an alternative to conventional aspiration supply unitsfor supplying gaseous fuels to engines it is known toutilise injection feed units which comprise, for each cylinder, an injector operable to deliver fuel directly to the induction inlet of the cylinder itself.

In known injection units the injectors are connected to the fuel tank by means of a single mechanical control device acting to subdivide the required fuel flow rate, which comprises a wall through which, for each injector, there is formed an opening for passage of the associated flow of fuel.

The control and subdivision device further includes a translating mechanical shutter which is coupled to the said wall and is displaceable along the wall itself by the action exerted by an electric motor, normally of the stepping type, for throttling the associated passage upon variation in the operating conditions of the engine.

Known injection units of the above-described type, although widely used, are not entirely satisfactory from the functional point of view in that, on the one hand they do not allow delivery of a precise fuel flow rate set at any time by the particular operating state of the engine, and on the other hand have relatively long response times which, in any case, vary upon variation in the conditions in which the injection units operate.

The above is essentially attributable to the presence of a mechanical type of device for controlling and subdiving the flow rate. In fact, the flow rate delivered by the device varies upon variation of the clearances present in the couplings connecting the shutter both to the said wall and to the engine. A possible reduction of clearances, obviously not impossible although involving a rise in construction costs, does not constitute a certain solution to the problem in that a decrease in the working tolerances in the connection of the various parts which move with respect to one another increases the sensitivity of the distributor to the quantity of impurities which, as is known, are practically always present, even though in different amounts, in conventional fuels.

The flow rate delivered by the control and subdivision device is also variable with a variation in the temperature conditions in which the unit operates; in fact, upon increase in temperature the fuel conditions vary and the device is subject to thermal dilatations which significantly compromise the precision of the fuel metering.

Finally, and for the reasons explained above, known units have relatively long and variable response times which impose a limit on any increase in the engine's performance.

The object of the present invention is to provide an injection method which makes it possible to resolve the above-explained problems in a simple manner.

According to the present invention there is provided a method of injection for supplying a gaseous fuel to an engine, particularly a propulsion engine, comprising the phases of acquiring an instantaneous engine operating condition, determining an instantaneous value of the required fuel flow rate corresponding to the said instantaneous operating condition, and delivering this instantaneous fuel flow rate to the engine, characterised in that the delivery of this instantaneous fuel flow rate is effected by utilising an assembly of solenoid valves having respective delivery rates, and in that it comprises the further phases of calculating the value of an instantaneous overall delivery rate such as to guarantee the required instantaneous fuel flow rate, and generating control signals such as to cause the opening of at least one of the said solenoid valves in such a way as to provide the overall delivery rate and thus the instantaneous fuel flow rate.

The present invention further relates to an injection unit.

According to the present invention there is further provided an injection unit for supplying gaseous fuel to an engine, particularly a propulsion engine comprising a source of supply of a gaseous fuel under pressure, acquisition means for acquiring an instantaneous operating condition of the engine, processing means for determining a required instantaneous fuel flow rate corresponding to the said instantaneous operating condition, and delivery means for delivering this fuel flow rate to the engine, characterised in that the said delivery means comprise an assembly of solenoid valves having respective delivery rates, and in that it further comprises memory means for storing at least the said delivery rates, first processor means for calculating the value of an overall instantaneous delivery rate such as to guarantee the required instantaneous fuel flow rate, and signal generation means for generating control signals such as to cause the opening of at least one of the said solenoid valves in such a way as to provide the overall delivery rate and thus the required fuel flow rate.

The invention will now be described with reference to the attached drawings which illustrate a non-limitative embodiment thereof, in which:

Figure 1 is a block schematic illustration of a preferred embodiment of the injection unit according to the present invention associated with an engine;
Figure 2 is a block schematic illustration of a detail of Figure 1;
Figure 3 illustrates in section and on an enlarged scale, two components of the detail of Figure 2 disposed in two different operating conditions; and
Figure 4 is a flow diagram of a preferred operating method of the unit of Figure 1 according to the present invention.

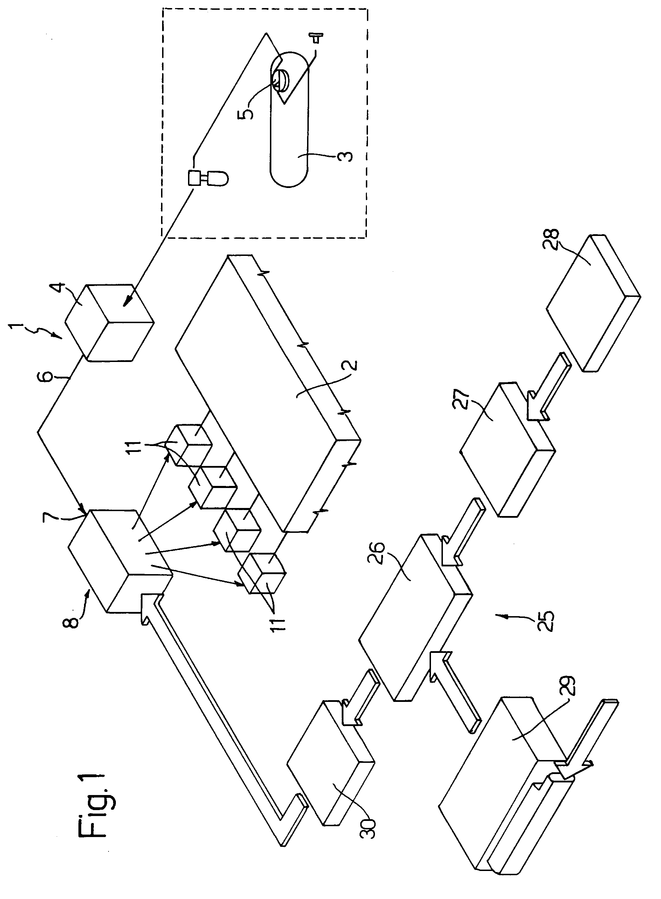

In Figure 1 the reference numeral 1 generally indicates a gaseous phase injection system for supplying a gaseous fuel, preferably liquefied petroleum gas (LPG) or, alternatively, methane, to a heat engine 2 for propulsion.

The installation 1 comprises a pressurised tank 3 containing the fuel, and a pressure reducer 4 which has an inlet connected to the tank 3 via a multi-valve unit 5 which is known and not described in detail, and an outlet connected via a tube 6 to an inlet 7 of a fuel delivery unit 8.

The delivery unit 8 is able to send variable quantities of fuel, each corresponding to an instantaneous operating condition of the engine 2, to the induction inlet (not illustrated) of each cylinder of the engine 2 ("multipoint" distribution).

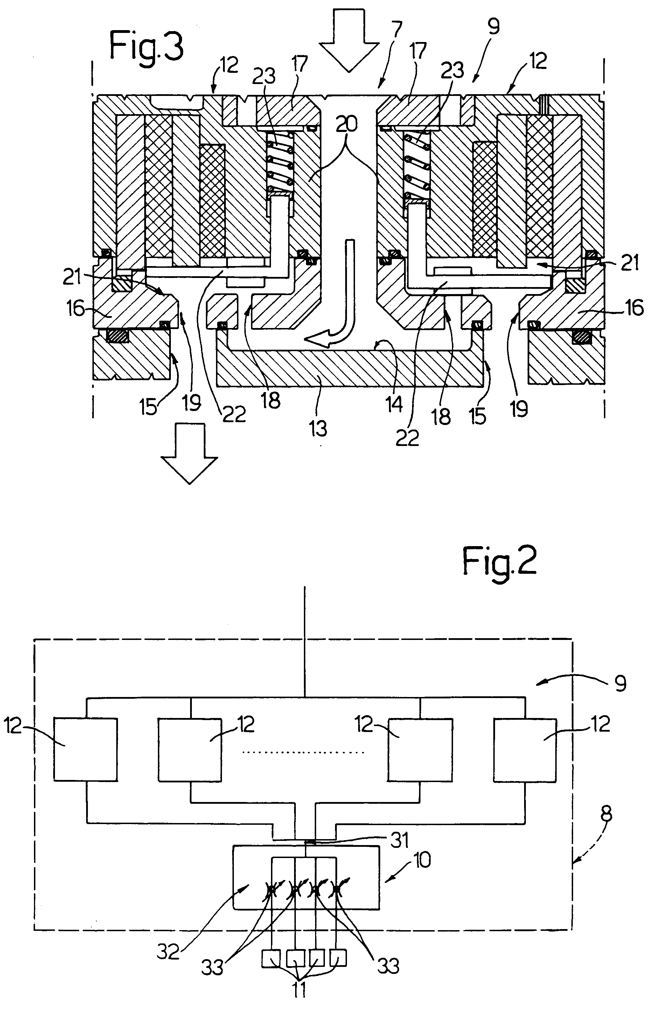

To this end, as illustrated in particular in Figure 2, the delivery unit 8 comprises a delivery device 9 for delivering the required flow rate, a divider device 10 which is disposed downstream of the delivery device 9 in the direction of fuel flow operable to divide the flow delivered by the delivery device 9 itself into equal parts. The delivery unit 8 further includes, for each cylinder (not illustrated) of the engine 2, an associated injector 11, known per se, connected to an associated outlet of the divider device 10 for delivering the associated fuel flow rates directly to the induction inlet of the associated cylinder.

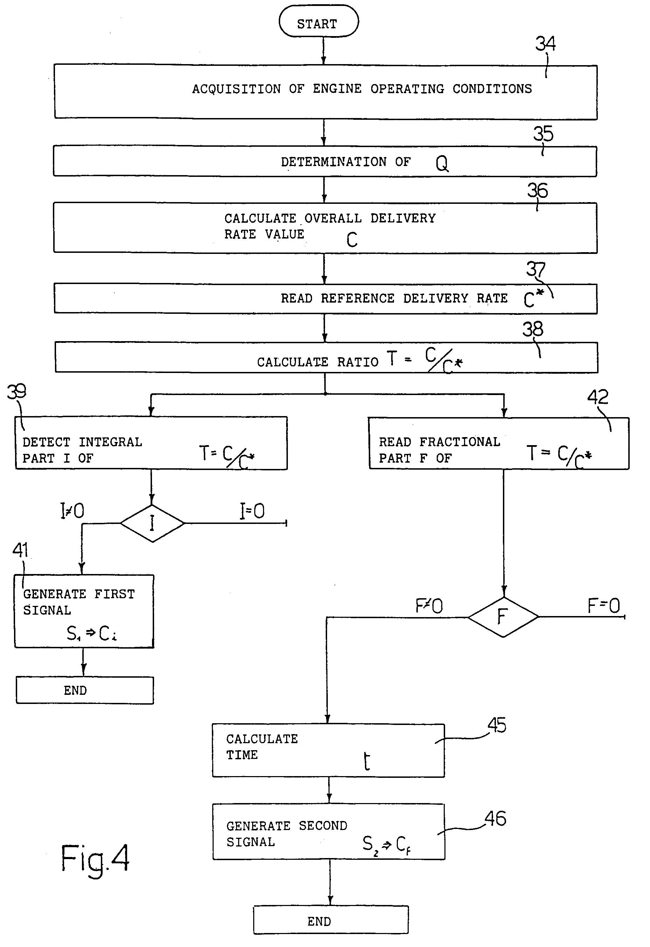

As illustrated, in particular in Figures 2 and 3, the delivery device 9 comprises a plurality of digital solenoid valves 12, only four of which are visible in Figure 2, connected together in parallel to deliver, in use, a succession of overall fuel flow rates to the divider device 10. The solenoid valves 12 are chosen and proportioned in such a way as to have increasing flow cross sections and delivery rate values C which increase substantially according to a geometric progression having geometric ratio of two, and are controlled, in use, by binary logic. In other words, one of the solenoid valves 12 and, in particular, the solenoid valve 12 which has the smallest flow cross section of all the solenoid valves 12 utilised, has a reference delivery rate $C^*$ whilst the other solenoid valves have greater delivery rates than that of the reference delivery rate, in practice, equal to $2C^*$, $4C^*$ etc. In this way, when it is necessary to have a delivery rate equal, for example, to $5C^*$ to provide a given required fuel flow rate it will be sufficient simultaneously to open the solenoid valves 12 having delivery rates $C^*$ and $4C^*$ to deliver the required fuel rate.

Constructionally, as illustrated in Figure 3, the delivery device 9 comprises an outer casing 13, partially illustrated, which defines a cavity 14 for housing the solenoid valves 12, and in which the fuel inlet 7 for fuel conveyed by the tube 6 is formed, and a plurality of outlet openings 15, only two of which are visible in Figure 3. Each solenoid valve 12 comprises, in particular, two associated end portions indicated 16 and 17, which are coupled to the casing 13 by a very tight seal via the interposition of a plurality of sealing washers. Through the portion 16 of each solenoid valve 12 there are formed a fuel inlet opening 18 communicating with the inlet 7 and a respective outlet opening 19 communicating with a respective outlet 15. Each solenoid valve 12 further includes an associated intermediate portion 20 which defines, together with the end portion 16, a chamber 21 housing a shutter 22. Each shutter 22 is movable within the associated chamber 21 between a closure position, in which it is maintained by the action of a compression spring 23 housed in the portion 20 to close the associated inlet opening 18, and an open position in which it puts the openings 18 and 19 into communication with one another and in which it is maintained by a coil or magnet 24 housed in a cavity of the intermediate portion 20 and exerting in use an action opposite that exerted by the associated spring 23.

Referring back to Figure 1, the unit 8 further includes a command and control device 25 for control of the delivery device 9. The device comprises an electronic central processing and control unit 26, which has a first input connected to an output from a calibration unit 27, known per se, interposed between the central control unit 26 and a memory block 28, also known per se, in which are stored the delivery rates of the solenoid valves 12 and a mapping containing the relationships between the commands sent by a known type of central injection electronic control unit 29 normally utilised for controlling the delivery of a liquid fuel, usually petrol, to the engine 2, and the rate of flow Q of gaseous fuel delivered to the engine 2 itself.

The output of the central control unit 29 is electrically connected to a second input of the central control unit 26 one output of which is connected to an input of an element 30, known per se, for controlling the solenoid valves 12.

Referring again to Figure 2, the divider device 10 has a single inlet 31 to which the overall flow rate delivered by all the solenoid valves 12 is conveyed, a plurality of outlets each connected to an associated injector 11, and a flow regulator, indicated 32, operable to allow the same rate of flow of fuel to pass through the different injectors 11. In the particular example described, the flow regulator 32 comprises, for each injector 11, an orifice 33 the flow cross section of which is adjustable in a continuous manner as a function of the instantaneous flow rate to be distributed or required by the engine 2.

In use the unit 8 described operates according to the method shown in the block diagram of Figure 4 comprising the operations of acquiring an instantaneous operating condition of the engine 2, block 34, determining a required fuel flow rate value Q corresponding to the instantaneous operating condition acquired, block 34, and calculating, as a function of the fuel supply conditions, the overall delivery rate C such as to guarantee the required fuel flow rate Q, block 36. The method further includes the further phase of reading the value of the reference delivery rate $C^*$, block 37, stored in the memory block 28, and in the particular case its solenoid valve 12 having the smallest flow cross section of all the solenoid valves 12, and calculating the value T=C/C*, that is to say the ratio between the overall delivery rate C and the reference delivery rate C*, block 38. The method then includes a further phase of detecting the value of the integral part I of the said ratio T of delivery rates, block 39; if this integral value I is different from zero a first command signal S1 is generated, block 41, such as to commute one or more of the solenoid valves 12 to their open position and determine an overall delivery rate Ci equal to the value I of the said integral part; if, on the other hand, this value is equal to zero this latter phase is not performed.

Still according to this method, parallel to the detection of the integral value I there is also detected the value F of a fractional part of the said delivery rate ratio T, block 42, after which, if this value is equal to zero the procedure stops, whilst if this value F is different from zero, there is calculated an opening time t of at least one solenoid valve 12, block 45, such as to cause a delivery rate Cf equal to the fractional part of the ratio T after which, by means of the block 46, a second command signal S2 is generated to open the said solenoid valve 12. Conveniently, this second signal S2 has a constant and predetermined cycle time tc, and is of the "portal" type that is to say of the type having, in each cycle time, two opposite commutation fronts spaced from one another by the first calculated time t. During the operation of the engine 2 the value of the time t between the two commutation fronts is variable between a nil value, if the fractional part is equal to zero, and a maximum value equal to the cycle time tc of the signal. It is therefore evident that by varying the ratio between the time t and the cycle time tc of the signal it is possible to obtain, by means of a solenoid valve having a determined delivery rate, an average delivery rate value in the variable cycle in a continuous manner between zero and the determined delivery rate itself with a resolution which depends on the resolution by which the command is generated.

At this point, by summing the delivery rates corresponding to the two generated command signals S1 and S2 there is obtained an overall instantaneous delivery rate equal to that required.

From the preceding it will be evident that because it utilises an assembly of solenoid valves 12, the described injection unit 8 has, above all with respect to known injection units, the undoubted advantage of allowing, for any operating condition of the engine, the delivery of extremely precise fuel flow rates and, in particular, flow rates exactly equal to those theoretically calculated on the basis of the instantaneous operating conditions of the engine 2.

In fact, the use of the digital solenoid valve assembly 12 and the particular manner of control of the solenoid valves 12 themselves makes it possible to achieve an injection unit which above all is free from mechanical members co-operating slidingly with one another so that it presents relatively high response times, and is practically insensitive to the thermal variations likely to be experienced in operation.

From the preceding description it is, moreover, evident that the described injection unit, because it utilises a flow divider device 10 separate from the solenoid valves 12, the function of which, as mentioned above, is exclusively that of providing in any operating conditions of the engine 2 a precise overall flow rate exactly equal to the overall theoretical flow rate required, it is possible both to subdivide or partition exactly each of the overall flows between the various cylinders of the engine 2 and to control the delivery of the instantaneous overall flow rates independently by the division of the instantaneous flow rates themselves between the various cylinders of the engine 2. This duplication of functions makes it possible to control the supply of fuel to each cylinder with extreme precision and consequently, control the overall polluting emissions from the engine 2 thereby maintaining them within predetermined values established by the regulations on environmental polluting agents.

Finally, from the preceding description it will appear evident that the unit 8 described can have modifications and variations introduced thereto which do not depart from the protective ambit of the present invention.

In particular the solenoid valves 12 could be replaced by different solenoid valves from those described by way of example, and a different solenoid control and command device 25 could be envisaged.

Moreover, the device 10 for suodivision of the fuel flow delivered by the solenoid valves 12 could be replaced by a different device from that described by way of example and, in particular, by a device adjustable in a discrete manner as a function of the rate of flow which has to be distributed.

## Claims

1. A method of injection for supplying a gaseous fuel to an engine (2), particularly a propulsion engine, comprising the phases of acquiring an instantaneous operating condition of the engine, determining a required instantaneous fuel flow rate value (Q) corresponding to the said instantaneous operating condition, and delivering this instantaneous fuel flow rate (Q) to the engine (2), characterised in that the delivery of this instantaneous flow rate (Q) is effected by utilising an assembly of solenoid valves (12) having respective delivery rates, and in that it includes the further phases of calculating the overall instantaneous delivery rate value (C) such as to guarantee the required instantaneous fuel flow rate (Q), and generating command signals (S1, S2) such as to cause opening of at least one of the said solenoid valves (12) in such a way as to provide the overall delivery rate (C) itself and thus deliver the instantaneous fuel flow rate (Q).

2. A method according to Claim 1, characterised in that the value of the ratio (T) between this overall delivery rate (C) and a reference delivery rate value (C*) is calculated, and the said command signals are generated as a function of the value of this delivery rate ratio (T).

3. A method according to Claim 2, characterised in that the said reference delivery rate (C*) is the delivery rate of the solenoid valve (12) of the said solenoid valve assembly (12) which has the smallest flow cross section of all the solenoid valves (12) of the assembly.

4. A method according to Claim 2 or Claim 3, characterised in that the generation of the said command signals (S1, S2) comprises the phases of detecting the value (I) of the integral part of the said delivery rate ratio (T), generating a first opening control signal (S1) for at least a first solenoid valve (12) of the said assembly in such a way as to determine a delivery rate (Ci) equal to the value (I) of the said integral part, detecting the value (F) of a fractional part of the said delivery rate ratio (T), and generating a second opening signal (S2) for at least a second solenoid valve (12) in such a way as to determine a delivery rate (Cf) equal to the value of the said fractional part.

5. A method according to Claim 4, characterised in that the said second signal (S2) has a constant and predetermined cycle time (tc) and comprises, for each cycle, two opposite commutation fronts, and in that the generation of the said second signal (S2) is preceded by a further phase in which the time (t) between the said two commutation fronts is calculated in such a way as to obtain the delivery rate (Cf) relating to the value of the said fractional part.

6. An injection unit (8) for supplying gaseous fuel to an engine (2), particularly a propulsion engine, comprising a source (3) of gaseous fuel under pressure, acquisition means (34) for acquiring an instantaneous operating condition of the engine (2), processing means (35) for determining a required instantaneous fuel flow rate value (Q) corresponding to the said instantaneous operating condition, and delivery means (9) for delivering this fuel flow rate to the engine (2), characterised in that the said delivery means (9) comprise an assembly of solenoid valves (12) having respective delivery rates, and in that it further includes memory means (28) for at least the said delivery rates, first processor means (36) for calculating the value of an overall instantaneous delivery rate such as to guarantee the required instantaneous fuel flow rate (Q), and signal generation means (41, 46) for generating control signals (S1, S2) such as to cause opening of at least one of the said solenoid valves (12) in such a way as to provide the overall delivery rate (C) and deliver the required fuel flow rate (Q).

7. A unit according to Claim 6, characterised in that it comprises second processor means (38) for calculating the value of the ratio (T) between this overall delivery rate (C) and a reference delivery rate value (C*) stored in the said memory means (28); the said generation means (41, 46) generating, in use, the said control signals (S1, S2) as a function of the value of this delivery rate ratio (T).

8. A unit according to Claim 7, characterised in that the said reference delivery rate (C*) is the delivery rate of the solenoid (12) of the said solenoid valve assembly which has the smallest flow cross section of all the solenoid valves (12) of the assembly.

9. A unit according to Claim 7 or Claim 8, characterised in that it further includes first detector means (39) for detecting the value (I) of the integral part of the said delivery rate ratio (T), and second detector means (42) for detecting the value (F) of a fractional part of the said delivery rate ratio (T), the said generation means (41, 46) comprising first generation means (41) for generating a first opening control signal (S1) for controlling at least a first of the said solenoid valves (12) to open in such a way as to cause a delivery rate (Ci) equal to the value (I) of the said integral part, and second generation means (46) for generating a second opening control signal (S2) for at least a second solenoid valve (12) in such a way as to cause a delivery rate (Cf) equal to the value (F) of the said fractional part.

10. A unit according to Claim 9, characterised in that the said second generation means (46) are operable to generate a second control signal (S2) having a predetermined constant cycle time (tc) having two opposite commutation fronts in the cycle, and in that it includes third processor means (45) for calculating the time (t) between the said two commutation fronts in such a way as to obtain the delivery rate (Cf) relating to the value of the said fractional part.

11. A unit according to any of Claims from 6 to 10, characterised in that the said solenoid valves (12) are connected together in parallel.

12. A unit according to any of Claims from 6 to 11, characterised in that at least some of the said solenoid valves (12) are proportioned in such a way as to provide the variable delivery rate values substantially according to a geometric progression with a geometric ratio of two.

13. A unit according to any of Claims from 6 to 12, characterised in that it further includes a plurality of injection members (11) each operable, in use, to deliver an associated quantity of fuel to a respective cylinder of the engine (2), and divider means (10) for uniformly distributing the instantaneous overall flow between the different injection members (11).

14. A unit according to Claim 13, characterised in that the said divider means (10) are separate from the said solenoid valves (12).

15. A unit according to Claim 13 or Claim 14, characterised in that the said divider means (10) include an associated flow regulator (13) for each injection member (11).

Fig.1

Fig.3

Fig.2

START

ACQUISITION OF ENGINE OPERATING CONDITIONS  — 34

DETERMINATION OF $Q$  — 35

CALCULATE OVERALL DELIVERY RATE VALUE $C$  — 36

READ REFERENCE DELIVERY RATE $C^*$  — 37

CALCULATE RATIO $T = C/C^*$  — 38

39 — DETECT INTEGRAL PART I OF $T = C/C^*$

42 — READ FRACTIONAL PART F OF $T = C/C^*$

$I \neq 0$  $I$  $I = 0$

41 — GENERATE FIRST SIGNAL $S_1 \Rightarrow C_i$

END

$F \neq 0$  $F$  $F = 0$

CALCULATE TIME $t$  — 45

GENERATE SECOND SIGNAL $S_2 \Rightarrow C_f$  — 46

END

Fig.4